# FASCICULE DE BREVET EUROPEEN

(11) **EP 1 614 600 B1**
(45) Date de publication et mention de la délivrance du brevet: **26.03.2008**
(21) Numéro de dépôt: 05014439.3
(22) Date de dépôt: 04.07.2005
(51) Int. Cl.: B60T 13/58, B60T 7/08

(54) **Dispositif d'actionnement hydraulique de frein de stationnement et procédé de commande d'un tel dispositif**
Hydraulische Betätigungsvorrichtung einer Feststellbremse und Betätigungsverfahren einer derartigen Vorrichtung
Hydraulic actuation device of a parking brake and method of controlling such a device

(30) Priorité: 07.07.2004 FR 0407596
(43) Date de publication de la demande: 11.01.2006
(73) Titulaire: ROBERT BOSCH GMBH, 70442 Stuttgart (DE)
(72) Inventeur: Dupuis, Vincent, 94100 Saint Maur (FR)
(74) Mandataire: Hurwic, Aleksander Wiktor

(56) Documents cités:
- DE-A- 3 806 475
- DE-C- 828 640
- DE-C- 936 187

## Description

L'invention concerne un dispositif d'actionnement hydraulique de frein de stationnement du type tel que décrit aux termes du préambule de la revendication 1 et tel que décrit pour l'essentiel dans le document DE 936 187 C1 et un procédé de commande d'un tel dispositif.

L'invention concerne plus particulièrement un dispositif de frein de stationnement ou de secours, notamment pour véhicule automobile, du type comportant un dispositif d'actionnement commandé qui exerce un effort déterminé sur un organe de manoeuvre du frein pour provoquer le serrage des moyens de blocage dudit frein de manière à immobiliser le véhicule et un procédé de commande d'un tel dispositif d'actionnement.

On connaît de nombreux systèmes de freinage pour véhicule automobile dont la fonction est techniquement soit de diminuer ou d'annuler la vitesse du véhicule équipé, soit de le maintenir immobile, notamment lorsque le véhicule se trouve à l'arrêt de manière prolongée.

On distingue ainsi pour un système de freinage de véhicule une première fonction, dite de frein de service, d'une deuxième fonction, dite de frein de stationnement ou de secours.

Le système de freinage comporte donc au moins un mécanisme de frein destiné à assurer la fonction de frein principal de service et/ou la fonction de frein de stationnement, le système de freinage comportant à cet effet un dispositif de frein de service et un dispositif de frein de stationnement ou de parc.

Les mécanismes de frein selon l'état de la technique sont essentiellement constitués par deux grandes familles, à savoir les freins à disque d'une part et les freins à tambour d'autre part, freins dont les fonctionnements respectifs sont bien connus et ne seront pas rappelés en détail dans la suite de la présente description.

Ces mécanismes de frein comportent habituellement des moyens uniques de blocage qui sont susceptibles d'être actionnés sélectivement soit par le dispositif de frein principal de service, soit par le dispositif de frein de stationnement, puisque ces dispositifs ne sont pas actionnés simultanément et assurent des fonctions de freinage bien distinctes, sauf en cas d'utilisation du frein de stationnement comme frein de secours.

En effet, le dispositif de frein dé stationnement peut constituer un frein de secours qui est susceptible d'être mis en oeuvre par le conducteur en cas de défaillance du dispositif de freinage principal du véhicule automobile.

Pour permettre notamment au dispositif de frein de stationnement d'assurer cette fonction de frein de secours, le système de freinage comporte des moyens de commande distincts pour chacun des deux dispositifs de freinage du mécanisme de frein.

Le document FR-A-2.829.543 décrit un exemple de mécanisme de frein à disque dont le cylindre de frein comporte, de manière conventionnelle, des moyens d'actionnement hydraulique destinés à assurer, en réponse à une commande par la pédale de frein du véhicule, la fonction de frein de service et des moyens d'actionnement mécanique destinés à assurer la fonction de frein de stationnement.

Plus précisément, les moyens d'actionnement mécanique du frein de stationnement comportent une combinaison de pièces mobiles qui sont commandées par un levier formant organe de manoeuvre sur lequel l'extrémité du câble d'un dispositif d'actionnement du frein de stationnement exerce un effort de traction de manière à provoquer le serrage contre le disque de frein des patins ou plaquettes formant les moyens de blocage du frein.

Le document FR-A-2.697.599 décrit un exemple de mécanisme de frein à tambour comportant, de manière conventionnelle, des moyens principaux d'actionnement hydraulique destinés à assurer, en réponse à une commande par la pédale de frein du véhicule, la fonction de frein de service et des moyens auxiliaires d'actionnement mécanique pour assurer la fonction de frein de stationnement ou de secours.

Plus précisément, les moyens auxiliaires d'actionnement mécanique du frein de stationnement comportent un levier d'actionnement, monté pivotant et qui est susceptible, sous l'action d'un effort de traction exercé par un câble de manoeuvre sur l'une de ses extrémités, de solliciter en écartement des segments primaire et secondaire formant des moyens de blocage portant des garnitures de friction contre la surface cylindrique interne du tambour de frein.

On connaît aussi des mécanismes hydrides de frein qui combinent l'utilisation d'un frein à disque et d'un frein à tambour pour assurer respectivement la fonction de frein principal et la fonction de frein de stationnement ou de secours, chaque frein comportant des moyens de blocage actionnés respectivement par un dispositif d'actionnement conventionnel.

Plus précisément, un tel mécanisme de frein comporte un dispositif d'actionnement hydraulique du frein de service à disque et un dispositif d'actionnement mécanique du frein de stationnement à tambour.

Les documents US-A-4.854.423 ou WO-A-96.41085 décrivent de tels mécanismes de frein, autrement connus sous le nom anglo-saxon « drum-in-hat », du fait qu'un tel mécanisme comporte centralement un tambour de frein entouré par le disque de frein s'étendant radialement vers l'extérieur de sorte qu'il présente en coupe axiale une forme générale de « chapeau ».

Comme on l'aura compris, quel que soit le type de mécanisme de frein, l'application d'un effort de freinage de stationnement pour serrer les moyens de blocage du frein est obtenue par l'actionnement d'un dispositif de frein de stationnement comportant un câble de manoeuvre qui exerce un effort déterminé, généralement un effort de traction, sur un levier formant organe de manoeuvre pour provoquer un changement d'état du frein et permettre l'immobilisation du véhicule.

Le dispositif de frein de stationnement comporte à cet effet un dispositif d'actionnement commandé de type mécanique, tel qu'un « frein à main », qui équipe aujourd'hui couramment les véhicules automobiles.

Un tel dispositif d'actionnement mécanique comporte usuellement un organe de commande manuel constitué d'un levier de frein à main qui est agencé dans l'habitacle et qui est solidaire d'une des extrémités d'un câble de manoeuvre dont l'autre extrémité actionne l'organe de manoeuvre du frein de stationnement.

Ainsi, pour actionner le câble de manoeuvre solidaire du levier de frein à main, le conducteur exerce sur ledit levier un effort de commande destiné à provoquer l'application d'un effort déterminé, généralement un effort de traction, sur un levier formant l'organe de manoeuvre du frein de stationnement.

Dans le cas de dispositif d'actionnement mécanique du frein de stationnement, l'énergie nécessaire à la production de la force ou effort de freinage est par conséquent fournie uniquement par l'effort musculaire du conducteur.

C 'est une des raisons pour lesquelles, les dispositifs mécaniques du type « frein à main » sont notamment considérés comme désagréables et pénibles à utiliser, particulièrement pour les personnes ayant peu de force musculaire.

De plus, l'effort de freinage appliqué qui provoque le serrage des moyens de blocage du frein de stationnement dépend directement de l'effort appliqué par le conducteur, de sorte que si le conducteur exerce un effort insuffisant sur le levier de frein à main, voire oublie de l'actionner, le véhicule ne sera alors pas correctement immobilisé ce qui peut entraîner des accidents.

On comprendra dès lors qu'un frein de stationnement mettant en oeuvre un dispositif d'actionnement mécanique de type « frein à main » n'est pas aussi fiable et d'un fonctionnement aussi sûr que souhaité.

D'autres dispositifs d'actionnement de frein de stationnement ont été développés notamment des dispositifs d'actionnement pouvant être actionnés électriquement ou fluidiquement, typiquement hydrauliquement.

Ainsi, le document US-A-4.792.447 décrit par exemple un dispositif d'actionnement électrique d'un mécanisme de frein à disque destiné à assurer la fonction de frein de stationnement.

Toutefois, un tel dispositif d'actionnement électrique n'est pas non plus satisfaisant notamment du fait qu'il requiert un jeu d'engrenages planétaires important et un moteur électrique de puissance élevée entraînant un coût de fabrication prohibitif et de surcroît un problème de fiabilité en cas de défaillance de la source d'énergie embarquée alimentant ledit dispositif.

Le document EP-A-0.526.273 décrit un frein à disque muni d'un frein de stationnement actionné hydrauliquement par une pression exercée par le conducteur sur la pédale de frein du véhicule assurant l'application des patins formant moyens de blocage sur les faces du disque de frein.

Le fonctionnement du dispositif d'actionnement hydraulique du frein de stationnement consiste à exercer tout d'abord sur la pédale de frein un effort pour générer une pression de commande qui provoque le serrage des patins sur le disque selon un effort de freinage donné puis tout en maintenant avec le pied l'effort sur la pédale, à manoeuvrer un interrupteur électrique permettant de mettre sous tension un moteur électrique entraînant en translation rectiligne selon l'axe du piston un manchon coaxial audit piston de manière à verrouiller le piston dans une position de freinage de stationnement dans laquelle le véhicule est immobilisé.

Cependant, un tel dispositif d'actionnement hydraulique présente de nombreux inconvénients.

En effet, il appartient au conducteur, comme précédemment avec un dispositif mécanique de type frein à main, de générer musculairement la pression hydraulique nécessaire à l'application de l'effort de freinage de stationnement.

De plus, le moteur électrique ne permettant pas d'augmenter la force d'application des patins sur le disque, il existe un risque que le véhicule ne soit pas correctement immobilisé si le conducteur n'appuie pas du tout ou pas suffisamment fort sur la pédale.

Pour remédier à ces inconvénients, l'invention propose un dispositif de frein de stationnement comportant un dispositif d'actionnement utilisant un fluide hydraulique sous pression pour générer l'effort déterminé nécessaire à l'application d'un effort de freinage de stationnement satisfaisant.

Dans ce but, l'invention propose un dispositif de frein de stationnement ou de secours, notamment pour véhicule automobile, du type comportant un dispositif d'actionnement commandé qui exerce un effort déterminé sur un organe de manoeuvre du frein pour provoquer le serrage des moyens de blocage dudit frein de manière à immobiliser le véhicule, du type dans lequel le dispositif d'actionnement de type hydraulique qui est alimenté en fluide sous pression comporte :
- un cylindre dans lequel coulisse un piston qui délimite axialement une chambre de pression hydraulique avant et qui est susceptible d'exercer l'effort mécanique déterminé sur l'organe de manoeuvre selon une course d'actionnement, et
- des moyens de clapet qui commandent sélectivement la mise en communication de la chambre de pression avant avec un orifice d'alimentation en fluide hydraulique sous pression pour établir une pression hydraulique d'actionnement dans la chambre de pression avant, caractérisé en ce que les moyens de clapet, interposés entre le piston et le cylindre, sont commandés par un déplacement axial du piston selon une course de commande préalablement à sa course d'actionnement.

Avantageusement, le dispositif d'actionnement selon l'invention permet de supprimer de l'habitacle le levier de frein à main et ceci au bénéfice d'un gain de place permettant une plus grande liberté de conception dans l'aménagement de l'habitacle ainsi qu'une amélioration de la sécurité passive.

De plus, le dispositif d'actionnement selon l'invention ne requiert pas ou peu d'effort musculaire de la part du conducteur et il peut être commandé de sorte qu'on obtient ainsi l'application d'un effort de frein de stationnement efficace indépendamment des capacités physiques du conducteur.

De préférence, le dispositif d'actionnement selon l'invention est raccordé pour son alimentation en fluide hydraulique sous pression au circuit de freinage du véhicule qui alimente aussi en fluide sous pression le dispositif d'actionnement hydraulique du frein principal de service.

Avantageusement, le dispositif d'actionnement selon l'invention est raccordé pour son alimentation en fluide hydraulique sous pression à la pompe ESP équipant le véhicule.

Avantageusement, on peut remplacer les dispositifs d'actionnement selon l'état de la technique, notamment les dispositifs de type frein à main, par un dispositif d'actionnement hydraulique selon l'invention de faible encombrement, et cela quelque soit le type de mécanisme de frein et sans qu'il soit nécessaire de procéder à des modifications de l'organe de manoeuvre du mécanisme de frein.

Avantageusement, le dispositif d'actionnement selon l'invention est de construction simple, fiable et de fonctionnement sûr, d'un prix de revient modéré et de préférence est associé à un organe de commande dans l'habitacle ayant un très faible encombrement et qui soit facile à actionner sans effort important du conducteur.

Selon d'autres caractéristiques du dispositif selon l'invention :
- les moyens de clapet comportent des moyens d'étanchéité primaire et secondaire qui sont susceptibles d'être agencés axialement respectivement en avant et en arrière de l'orifice d'alimentation en fluide sous pression de manière à isoler la chambre hydraulique de pression avant de l'orifice d'alimentation lorsque le piston est en position avant de repos ;
- le dispositif comporte des moyens de commande en translation du piston selon la course de commande préalable qui correspond à un déplacement axial du piston dans le cylindre entre :
   - une position avant de repos, vers laquelle le piston est rappelé élastiquement et dans laquelle les moyens de clapet isolent de manière étanche la chambre hydraulique de pression avant de l'orifice d'alimentation, et
   - une position intermédiaire dans laquelle la chambre de pression avant est alimentée en fluide hydraulique sous pression ;
- les moyens de commande en déplacement axial du piston comportent des moyens d'entraînement, tel qu'un moteur électrique, qui sont susceptibles d'actionner des moyens de transmission de mouvement permettant de transformer un mouvement de rotation du moteur en un mouvement de translation du piston ;
- les moyens de transmission de mouvement comporte un mécanisme de type « vis-écrou » comportant un écrou taraudé qui est immobilisé axialement et qui est entraîné en rotation par le moteur de manière à provoquer un déplacement axial en translation d'une vis filetée dans l'écrou, ladite vis étant susceptible d'entraîner le piston en déplacement ;
- le piston est susceptible d'être déplacé selon une course d'actionnement axiale vers l'arrière de sa position intermédiaire à une position arrière de freinage, dans laquelle le piston sollicite des moyens d'actionnement exerçant l'effort mécanique déterminé sur l'organe de manoeuvre du frein ;
- le dispositif comporte des moyens de verrouillage mécanique destinés à immobiliser axialement le piston en position arrière de freinage ;
- les moyens d'actionnement de l'organe de manoeuvre du frein sont liés en déplacement au piston avec un jeu axial déterminé qui est sensiblement égal à la course de commande du piston de manière que les moyens d'actionnement ne soient pas sollicités lors du déplacement du piston de sa position avant de repos à sa position intermédiaire ;
- les moyens d'actionnement dont une tige comportant une tête cylindrique est montée mobile axialement dans un tronçon cylindrique interne complémentaire du piston entre :
   - une position avant de repos, dans laquelle la tête de la tige est en appui contre une butée arrière du tronçon cylindrique interne du piston en position avant de repos, et
   - une position arrière de fonctionnement dans laquelle la tête de la tige, qui est en appui contre une butée avant du tronçon cylindrique interne du piston, est sollicitée au cours de la course d'actionnement de manière à exercer un effort mécanique déterminé sur l'organe de manoeuvre.

L'invention propose aussi un procédé de commande d'un dispositif de frein de stationnement ou de secours du type comportant un dispositif d'actionnement selon les caractéristiques précédentes, caractérisé en ce qu'il comporte pour la mise en oeuvre du frein de stationnement :
- une première étape consistant à actionner les moyens de commande du piston pour déplacer le piston de sa position avant de repos vers sa position intermédiaire de manière à permettre l'alimentation en fluide hydraulique sous pression de la chambre de pression avant ;
- une deuxième étape consistant à alimenter la chambre de pression avant en fluide hydraulique à une première pression P1 de manière à provoquer le déplacement du piston à l'encontre de moyen de rappel jusqu'à sa position arrière de freinage dans laquelle il exerce sur les moyens d'actionnement de l'organe de manoeuvre un effort mécanique déterminé maximal correspondant à l'application par les moyens de blocage du frein d'un effort de freinage suffisant pour immobiliser le véhicule en stationnement ; et
- une troisième étape consistant à actionner les moyens de verrouillage pour verrouiller mécaniquement le piston dans sa position arrière de freinage.

De plus, le procédé de commande comporte pour libérer le frein de stationnement une étape consistant à alimenter la chambre de pression avant en fluide hydraulique à une seconde pression P2 supérieure à la première pression P1 de manière à permettre le déverrouillage du piston qui est rappelé élastiquement vers sa position avant de repos.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un dispositif d'actionnement de frein de stationnement selon l'invention ;
- la figure 2 est une vue en perspective de trois quart arrière avec arrachement qui illustre un dispositif selon la figure 1 ;
- les figures 3 à 6 sont des vues en coupe axiale d'un dispositif selon la figure 1 qui illustrent différentes positions de fonctionnement lors de l'activation du frein de stationnement ;
- les figures 7 à 10 sont des vues en coupe axiale d'un dispositif selon la figure 1 qui illustrent différentes positions de fonctionnement lors de la désactivation du frein de stationnement.

Dans la description qui va suivre, des chiffres de référence identiques désignent des pièces identiques ou ayant des fonctions similaires.

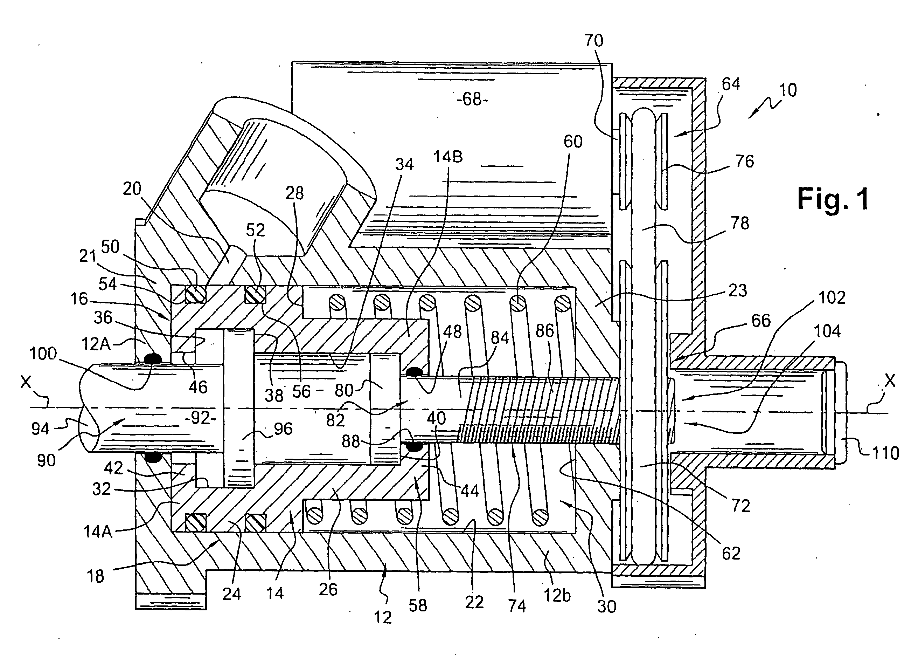

Par convention, les termes « avant », « arrière », « intérieur », « extérieur » désignent respectivement des éléments ou des positions orientés respectivement vers la gauche, la droite, le haut ou le bas de la figure 1.

On a représenté à la figure 1 un dispositif d'actionnement commandé 10 qui est susceptible d'exercer un effort mécanique déterminé sur un organe de manoeuvre d'un frein de stationnement ou de secours (non représenté) de manière à provoquer le serrage des moyens de blocage dudit frein pour immobiliser le véhicule équipé du dispositif de frein.

Le dispositif d'actionnement commandé 10 est un dispositif de type hydraulique, c'est-à-dire dont l'effort mécanique déterminé qu'il exerce sur l'organe de manoeuvre par le dispositif d'actionnement est obtenu hydrauliquement.

Le dispositif d'actionnement 10, dont un axe X détermine une direction axiale générale, comporte un cylindre 12 dans lequel coulisse un piston 14 qui délimite axialement une chambre de pression hydraulique avant 16 et des moyens de clapet 18 qui commandent sélectivement la mise en communication de la chambre pression avant 16 avec un orifice d'alimentation 20 en fluide hydraulique sous pression de manière à établir une pression hydraulique d'actionnement dans ladite chambre de pression 16.

Le cylindre 12 comporte un corps qui est ici réalisé en deux parties respectivement avant 12A et arrière 12B pour permettre le montage des organes mobiles du dispositif d'actionnement 10, tels que le piston 14, et qui sont assemblés par tout moyen approprié tels que par soudage, collage, emboîtement élastique ou vissage, et de préférence de manière étanche.

Le cylindre 12 comporte un alésage interne 22 avec la surface cylindrique duquel coopère le piston 14 et qui est délimité axialement à l'avant par une paroi transversale avant 21 et à l'arrière par une paroi transversale arrière 23.

Le piston 14 comporte au moins un tronçon cylindrique externe avant 24 de guidage du piston 14 dans l'alésage 22 du cylindre 12. Le tronçon cylindrique externe avant 24 se prolonge ici axialement vers l'arrière par un tronçon cylindrique externe arrière 26 dont le diamètre extérieur est inférieur au diamètre extérieur du tronçon cylindrique externe avant 24.

Le tronçon cylindrique externe arrière 26 se raccorde au tronçon cylindrique externe avant 24 par une face de raccordement 28 qui s'étend globalement radialement par rapport à l'axe X.

Le piston 14 délimite axialement en arrière une chambre arrière 30 délimitée radialement par l'alésage interne 22 du cylindre 12.

Le piston 14 comporte un tronçon cylindrique interne avant 32 et un tronçon cylindrique interne arrière 34.

Le piston 14 est ainsi réalisé en deux parties respectivement avant 14A et arrière 14B de manière à permettre le montage d'organes mobiles en coulissement dans les tronçons cylindriques internes avant 32 et arrière 34.

Le tronçon cylindrique interne avant 32 est délimité axialement par une face de butée avant 36 et une face de butée arrière 38, qui s'étendent respectivement radialement par rapport à l'axe X.

Le tronçon cylindrique interne arrière 34 est délimité axialement vers l'arrière par une face de butée avant 40.

Le piston 14 est donc délimité radialement par les tronçons cylindriques externes avant 24 et arrière 26 et axialement à l'avant par une paroi transversale avant 42 et à l'arrière par une paroi transversale arrière 44.

Les parois transversales avant 42 et arrière 44 s'étendent radialement vers l'intérieur et comportent centralement respectivement un perçage avant 46 et un perçage arrière 48 destinés à permettre le passage à travers les parois d'organes mobiles coulissant axialement dans les tronçons cylindriques internes avant 32 et arrière 34.

Conformément à l'invention, le dispositif d'actionnement 10 comporte des moyens de clapet 18 qui sont interposés entre le piston 14 et le cylindre 12 et qui sont commandés par un déplacement axial du piston 14 selon une course de commande préalablement à une course d'actionnement.

Plus particulièrement, les moyens de clapet 18 comportent des moyens d'étanchéité primaire 50. et secondaire 52 susceptibles d'être agencés axialement respectivement en avant et en arrière de l'orifice 20 d'alimentation en fluide sous pression de manière à isoler la chambre hydraulique de pression avant 16 de l'orifice d'alimentation 20 lorsque le piston 14 est en position avant, dite de repos, comme illustré sur la figure 1.

Les moyens d'étanchéité primaire 50 et secondaire 52 sont interposés radialement entre le piston 14 et l'alésage 22 du cylindre 12 et sont ici portés par le piston 14. Le tronçon cylindrique externe avant 24 comporte une gorge annulaire avant 54 et une gorge annulaire arrière 56 pour le montage des moyens d'étanchéité primaire 50 et secondaire 52 respectivement.

Les moyens d'étanchéité primaire 50 et secondaire 52 sont par exemple constitués par des joints, tels que des joints toriques en matériau élastomère ou des joints composites.

En variante, les moyens d'étanchéité primaire 50 et secondaire 52 peuvent être portés par le cylindre 12, l'alésage interne 22 comportant de manière analogue des gorges annulaires avant 54 et arrière 56.

Le dispositif d'actionnement 10 comporte des moyens de commande 58 du déplacement du piston 14 selon une course de commande préalable correspondant à une translation axiale du piston 14 dans l'alésage 22 du cylindre 12 entre une position avant de repos, vers laquelle le piston 14 est rappelé élastiquement et dans laquelle les moyens de clapet 18 isolent de manière étanche la chambre hydraulique de pression avant 16 de l'orifice d'alimentation 20, et une position intermédiaire dans laquelle la chambre pression avant 16 est alimentée en fluide hydraulique sous pression.

Le piston 14 est rappelé élastiquement par un organe de rappel élastique 60, tel qu'un ressort de compression, qui est logé dans la chambre arrière 30 du cylindre 12 et qui prend appui respectivement à l'avant sur la face de raccordement 28 des tronçons cylindriques externes avant 24 et arrière 26 et à l'arrière sur la face avant 62 de la paroi transversale. arrière 23 du cylindre 12.

Le tronçon cylindrique externe arrière 26 du piston est reçu avantageusement à l'intérieur des premières spires de l'extrémité avant du ressort de rappel 60 de manière à guider ce dernier en translation axiale.

Les moyens de commande 58 du déplacement axial du piston 14 comportent des moyens d'entraînement 64 qui sont susceptibles d'actionner des moyens de transmission de mouvement 66 permettant notamment de transformer un mouvement de rotation en un mouvement de translation du piston 14.

Les moyens d'entraînement 64 sont formés par un moteur électrique 68 dont l'arbre de sortie 70 actionne les moyens de transmission de mouvement 66.

Les moyens de transmission de mouvement 66 comportent un mécanisme de type « vis-écrou » constitué par un écrou taraudé 72 qui est immobilisé axialement et qui est entraîné en rotation par le moteur 68 de manière à provoquer un déplacement axial en translation d'une vis filetée 74 qui est reçue dans l'écrou 72 pour entraîner en déplacement le piston 14.

Le moteur 68 comporte avantageusement un dispositif de réduction constitué par une première poulie 76 solidaire de l'arbre de sortie 70 du moteur qui entraîne en rotation par l'intermédiaire d'une courroie 78 une deuxième poulie formée par l'écrou 72.

En variante, la courroie 78 peut être remplacée par tout autre moyen approprié comme des engrenages.

Le vis 74 comporte, axialement d'avant en arrière, une tête 80 qui est solidaire d'un corps longitudinal 82 comportant un premier tronçon cylindrique avant 84 est un second tronçon cylindrique arrière fileté 86 destiné à coopérer avec l'écrou 72 des moyens de transmission mouvement 66.

La tête 80 coulisse axialement dans le tronçon cylindrique interne arrière 34 du piston 14 et est susceptible de venir en appui contre la face avant 40 de butée.

Le tronçon cylindrique avant 84 du corps longitudinal 82 de la vis 74 qui est dépourvu de filetage, traverse la paroi transversale arrière 44 du.piston 14 par l'intermédiaire du perçage arrière 48 et il coopère avec un joint d'étanchéité arrière 88 interposé radialement entre le tronçon 84 et le perçage 48 de manière à assurer, conjointement avec le joint secondaire 52, l'étanchéité entre la chambre de pression avant 16 et la chambre arrière 30.

Le dispositif d'actionnement 10 comporte des moyens d'actionnement 90 qui exercent directement ou indirectement sur l'organe de manoeuvre du frein un effort déterminé en réponse à une sollicitation du piston 14 auxquelles ils sont liés en déplacement.

Les moyens d'actionnement 90 sont constitués par une tige d'actionnement 92 qui est liée en déplacement au piston 14 avec un jeu axial déterminé qui est sensiblement égal à la course de commande du piston de telle sorte que les moyens d'actionnement 90 ne soient pas sollicités lors du déplacement du piston 14 de sa position avant de repos à sa position intermédiaire.

La tige d'actionnement 92 comporte, axialement d'avant en arrière, un corps longitudinal 94 dont est solidaire une tête cylindrique 96 qui est montée mobile axialement dans le tronçon cylindrique interne avant 32 du piston 14.

Le corps longitudinal 94 traverse axialement la paroi transversale avant 42 du piston 14 par l'intermédiaire du perçage avant 46 et la paroi transversale avant 21 du cylindre 12 par l'intermédiaire du perçage avant.

Un joint d'étanchéité avant 100 est interposé radialement entre le corps longitudinal 94 et le perçage avant pour assurer l'étanchéité de la chambre de pression avant 16.

Le piston 14 est susceptible d'être déplacé selon une course d'actionnement axial vers l'arrière de sa position intermédiaire à une position arrière, dite de freinage, dans laquelle le piston 14 sollicite la tête cylindrique 96 des moyens d'actionnement 90.

Plus précisément, le piston 14 exerce ici un effort de traction sur la tête cylindrique 96 des moyens d'actionnement 90.

Le dispositif d'actionnement 10 comporte de préférence des moyens de verrouillage mécanique qui sont susceptibles d'immobiliser axialement le piston 14 en position arrière de freinage.

Les moyens de verrouillage mécanique 102 sont avantageusement constitués par les moyens de commande 58 du déplacement du piston 14 décrits précédemment.

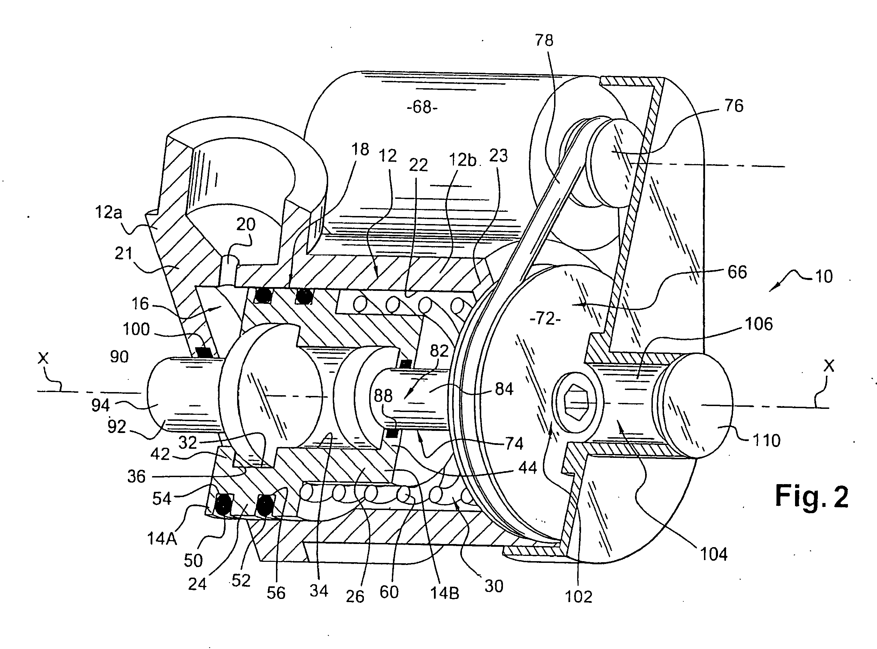

Comme on peut le voir sur la figure 2, les moyens de verrouillage 102 comportent un dispositif de secours 104 de manière à permettre un déverrouillage manuel des moyens 102 de en cas de dysfonctionnement du moteur électrique 68 des moyens de commande 58.

Le dispositif de secours 104 comporte une cheminée d'accès 106 à travers laquelle un opérateur peut engager axialement un outil, tel qu'un tournevis ou une clé, comportant à son extrémité avant une tête de forme complémentaire à celle d'une empreinte 108 qui est agencée à l'extrémité arrière la vis 74 des moyens de transmission 66.

Avantageusement, la cheminée d'accès 106 au dispositif de secours 104 est obturée par un bouchon 110 de protection de manière à éviter toute pollution extérieure du dispositif d'actionnement 10, notamment par la poussière provenant des garnitures du frein principal de service.

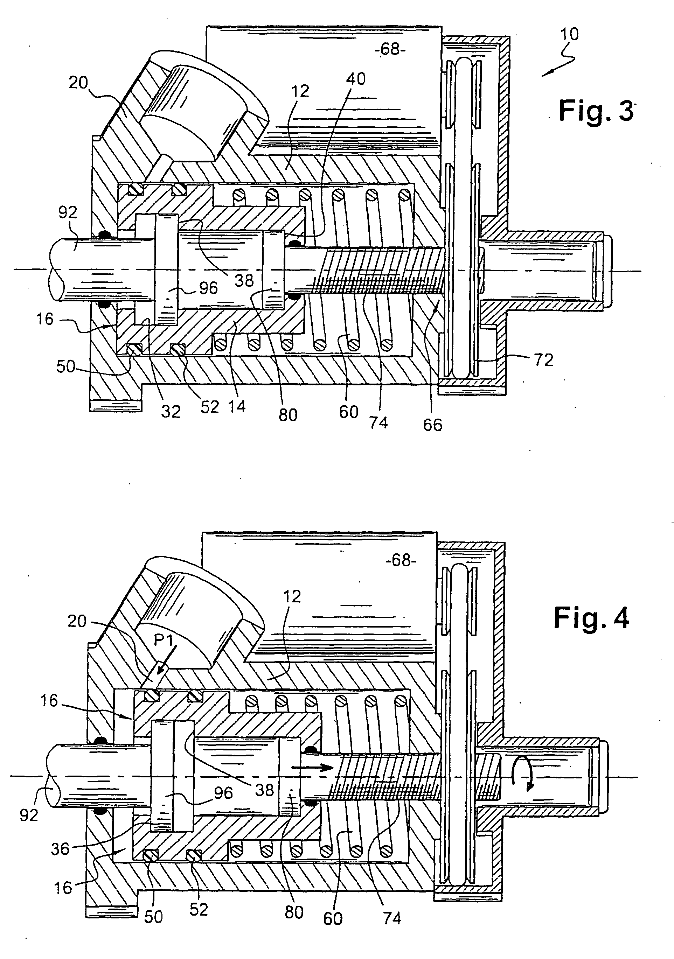

Le fonctionnement du dispositif d'actionnement 10 selon l'invention va maintenant être expliqué en référence aux figures 3 à 6 qui illustrent les différentes étapes de mise en oeuvre du frein de stationnement.

La figure 3 représente le dispositif d'actionnement 10 en configuration de repos.

Dans cette configuration, le piston 14 est sollicité élastiquement par le ressort 60 et se trouve dans sa position avant de repos dans laquelle les joints d'étanchéité primaire 50 et secondaire 52 s'étendent axialement de part et d'autre de l'orifice d'alimentation 20 isolant ainsi la chambre de pression avant 16 dont le volume est quasiment nul.

La tige d'actionnement 92 occupe une position avant de repos dans laquelle la tête cylindrique 96 est en appui contre la face de butée arrière 38 du tronçon cylindrique interne avant 32.

La tête 80 de la vis 74 est en appui contre la face 40 de butée arrière du tronçon cylindrique interne arrière 34.

Selon une première étape du procédé de commande du dispositif d'actionnement 10 selon l'invention, on actionne les moyens de commande 58 du piston 14 pour déplacer le piston 14 de sa position avant de repos vers sa position intermédiaire de manière à permettre l'alimentation en fluide hydraulique sous pression de la chambre de pression 16 avant.

Plus précisément, le moteur électrique 68, en réponse à un ordre de commande d'activation du dispositif de frein de stationnement, entraîne en rotation l'écrou 72 des moyens de transmission 66 et provoque ainsi un déplacement axial vers l'arrière de la vis 74.

La tête 80 étant en appui contre la face de butée arrière 40 du piston 14, ledit piston 14 est entraîné en translation vers l'arrière selon une course de commande jusqu'à se trouver en position intermédiaire, telle qu'illustrée à la figure 4.

Durant cette course de commande, la tige d'actionnement 92 n'est pas sollicitée par le piston 14 et coulisse axialement dans le tronçon cylindrique interne avant 32 du piston 14 jusqu'à venir en appui contre la face de butée avant 36.

Le déplacement axial vers l'arrière du piston 14 a pour effet de déplacer le joint primaire 50 en arrière de l'orifice d'alimentation 20 de la chambre de pression avant 16 qui peut dès lors, conformément à une deuxième étape du procédé de commande, être alimentée en fluide hydraulique à une première pression est « P1 ».

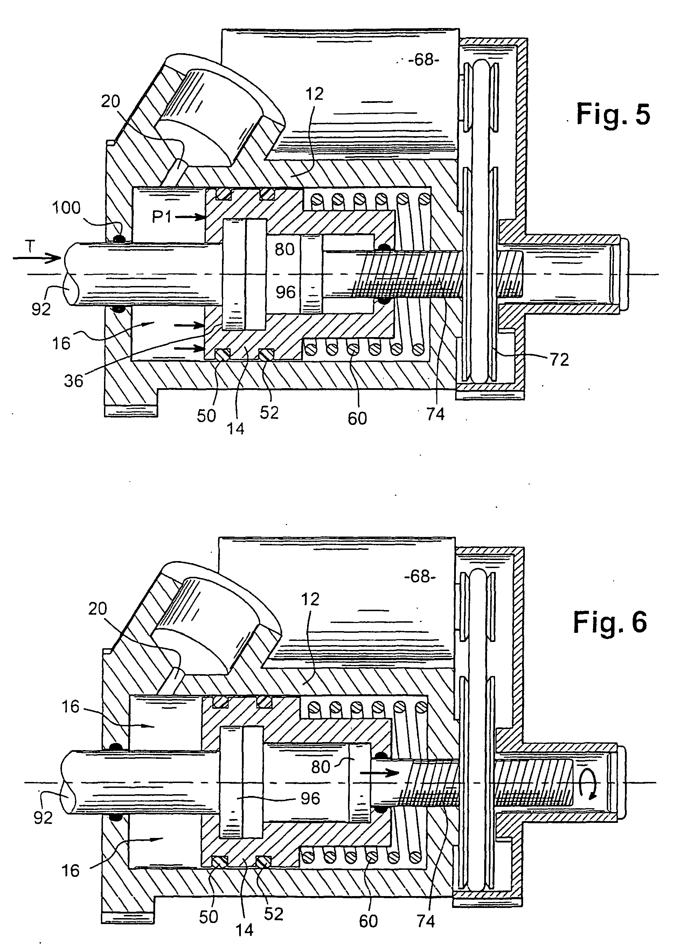

Comme on peut le voir la figure 5, l'établissement de la pression « P1 » dans la chambre de pression avant 16 provoque le déplacement vers l'arrière du piston 14 à l'encontre de l'effort de rappel exercé par le ressort de rappel élastique 60.

Le piston 14 parcourt alors une course d'actionnement correspondant à un déplacement axial de sa position intermédiaire jusqu'à sa position arrière de freinage.

Au cours de cette course d'actionnement, le piston 14 sollicite la tête cylindrique 96 des moyens d'actionnement 90 selon un effort de traction « T » qui est transmis par la tige d'actionnement 92 à l'organe de manoeuvre du dispositif de frein de stationnement.

Lorsque le piston 14 occupe sa position arrière de freinage, telle qu'illustrée à la figure 6, la tige d'actionnement 92 exerce alors un effort mécanique déterminé sur l'organe de manoeuvre qui correspond à l'application, par les moyens de blocage du frein de stationnement, d'un effort de freinage suffisant pour provoquer l'immobilisation du véhicule.

Conformément à une troisième étape du procédé de commande, on actionne alors à nouveau le moteur électrique 68 pour provoquer le déplacement vers l'arrière de la vis 74 jusqu'à ce que la tête de vis 80 soit en appui contre la face de butée arrière 40 du tronçon 34 du piston 14.

Le piston 14 est alors verrouillé en position arrière de freinage de sorte qu'il est plus nécessaire de maintenir la pression P1 dans la chambre de pression avant 16.

En variante, le moteur électrique 68 commandant le déplacement de la vis 74 pourrait être actionné de sorte que, simultanément à l'alimentation en fluide à la pression « P1 » de la chambre de pression avant 16, la vis 74 accompagne le piston 14 lors de son déplacement selon la course d'actionnement.

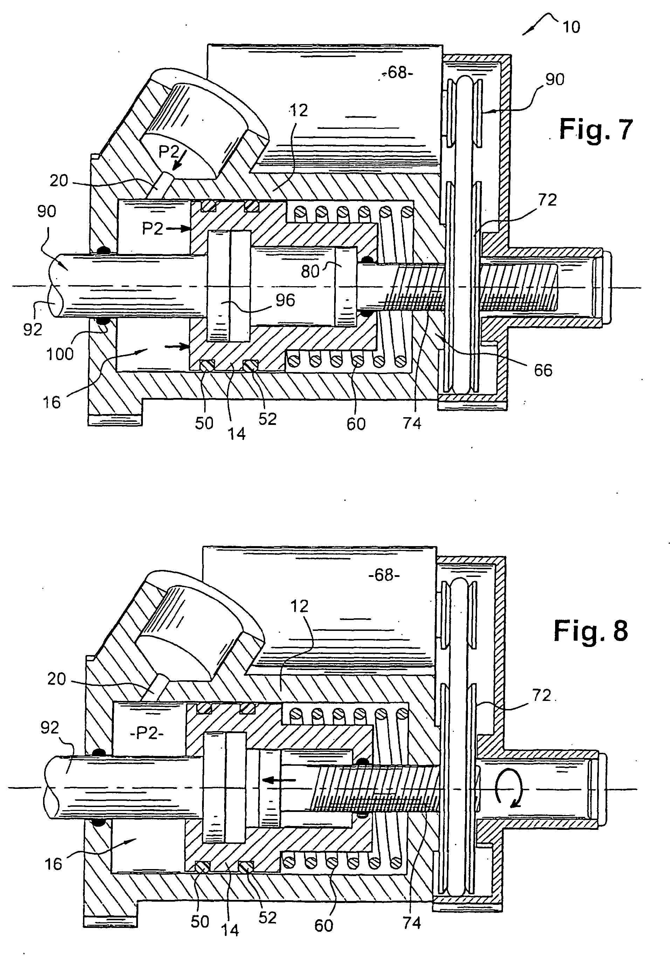

On décrira maintenant en référence aux figures 7 à 10, la libération du dispositif de frein de stationnement.

Conformément au procédé de commande selon l'invention, la libération du frein de stationnement est obtenue en alimentant la chambre de pression avant 16 en fluide à une pression « P2 » supérieure à la pression P1 pour exercer sur le ressort de rappel 60 du piston 14 un effort supérieur et permettre au moteur électrique 68 d'entraîner la vis 74 en déplacement de sa position arrière de verrouillage illustrée à la figure 7 jusqu'à une position avant illustrée la figure 8.

Le moteur 68 peut donc avantageusement être un moteur de taille réduite dont la puissance est suffisante pour entraîner en rotation de l'écrou 72 ou directement de la vis 74.

Dès lors que le piston 14 est déverrouillé, on cesse d'appliquer la pression « P2 » dans la chambre de pression avant 16.

Avantageusement, les pressions « P1 » et « P2 » de fluide hydraulique sont obtenues par des moyens équipant le véhiucle, tels que la pompe ESP.

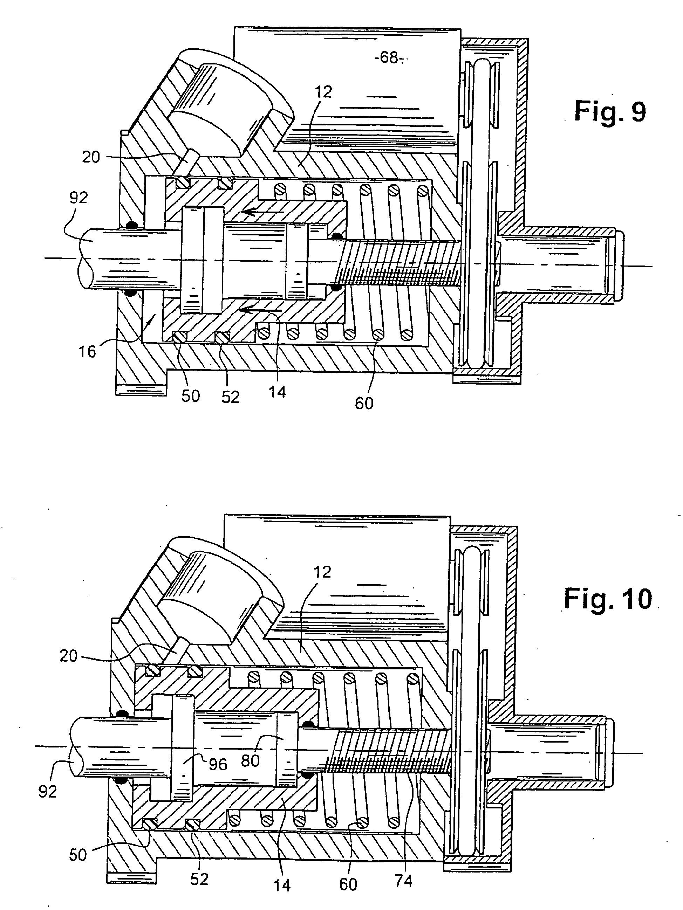

Comme on peut le voir aux figures 9 et 10, le piston 14 est alors rappelé élastiquement vers sa position avant de repos par le ressort 60 et le fluide hydraulique est évacué de la chambre pression avant 16 par l'orifice d'alimentation 20.

Lorsque le dispositif de frein de stationnement comporte des moyens de rappel des moyens de blocage du frein, par exemple un ressort destiné à rappeler vers leur position de repos des segments primaire et secondaire d'un frein à tambour, l'effort de rappel exercé par ces moyens de rappel s'additionne à l'effort du ressort de rappel 60 du piston 14.

Avantageusement, l'ordre de commande d'activation du dispositif de frein de stationnement, c'est-à-dire de mise en oeuvre du dispositif d'actionnement, est obtenu automatiquement et indépendamment de toute action du conducteur par des moyens de contrôle, tels qu'un calculateur associé à des capteurs, et ceci en fonction de paramètres de fonctionnement déterminés comme la vitesse du véhicule, l'engagement d'un rapport de vitesse ou d'autres paramètres.

En variante, l'ordre de commande d'activation du dispositif de frein de stationnement est émis manuellement par le conducteur lorsqu'il agit sur un organe de commande tel qu'un interrupteur ou un commutateur, de sorte l'effort de pression nécessaire est un effort faible pouvant être appliqué par tout conducteur indépendamment de ses capacités physiques.

Avantageusement, le frein de stationnement constitue un frein de secours susceptible d'être mis en oeuvre automatiquement ou par le conducteur en cas de défaillance du dispositif de freinage principal du véhicule automobile.

Avantageusement, le corps longitudinal 94 de la tige d'actionnement 92 est solidaire à son extrémité avant d'un câble de liaison sur lequel s'exerce l'effort mécanique déterminé, de manière à permettre de remplacer un dispositif d'actionnement mécanique par un dispositif d'actionnement selon l'invention sans procéder à une quelconque modification de l'organe de manoeuvre du frein de stationnement.

En variante, la tige d'actionnement 92 agit directement sur l'organe de manoeuvre, tel qu'un levier, du frein de stationnement.

Avantageusement, le dispositif d'actionnement selon l'invention est susceptible d'être mis en oeuvre pour agir sur l'organe de manoeuvre d'un dispositif de frein de stationnement et le dispositif de frein de stationnement comporte un mécanisme de frein à disque ou de frein à tambour.

De préférence, le dispositif d'actionnement hydraulique selon l'invention est utilisé pour commander un mécanisme de frein à tambour assurant la fonction de frein de stationnement dans un mécanisme hybride de type « drum-in-hat ».

Bien entendu, la présente invention n'est nullement limitée au mode de réalisation qui vient être décrit.

En variante, l'effort mécanique déterminé qui est exercé par les moyens d'actionnement 90 du dispositif d'actionnement 10 du frein de stationnement est un effort de poussée.

En variante, les moyens de commande 58 du déplacement du piston 14 sont constitués par un organe tel qu'un manchon en fer doux solidaire du piston 14 qui, en réponse à des moyens de type électro-mécanique, comme un électro-aimant, est susceptible de provoquer un déplacement du piston 14 axialement vers l'arrière selon la course de commande de manière à amener le piston 14 dans une position intermédiaire dans laquelle la chambre de pression avant 16 est alimentée en fluide hydraulique sous pression.

Le dispositif de frein de stationnement selon la présente invention s'applique notamment à l'industrie automobile et plus particulièrement à l'industrie du freinage pour véhicules automobiles, tels que les véhicules de tourisme.

## Revendications

1. Dispositif de frein de stationnement ou de secours, notamment pour véhicule automobile, du type comportant un dispositif d'actionnement commandé (10) qui exerce un effort mécanique déterminé sur un organe de manoeuvre du frein pour provoquer le serrage des moyens de blocage dudit frein de manière à immobiliser le véhicule, du type dans lequel le dispositif d'actionnement (10) de type hydraulique qui est alimenté en fluide sous pression comporte :
- un cylindre (12, 22) dans lequel coulisse un piston (14) qui délimite axialement une chambre de pression hydraulique avant (16) et qui est susceptible d'exercer l'effort mécanique déterminé sur l'organe de manoeuvre selon une course d'actionnement, et
- des moyens de clapet (18) qui commandent sélectivement la mise en communication de la chambre de pression avant (16) avec un orifice (20) d'alimentation en fluide hydraulique sous pression pour établir une pression hydraulique d'actionnement dans la chambre de pression avant (16),
**caractérisé en ce que** les moyens de clapet (18), interposés entre le piston (14) et le cylindre (12), sont commandés par un déplacement axial du piston (14) selon une course de commande préalablement à sa course d'actionnement.

2. Dispositif de frein de stationnement selon la revendication 1, **caractérisé en ce que** les moyens de clapet (18) comportent des moyens d'étanchéité primaire (50) et secondaire (52) qui sont susceptibles d'être agencés axialement respectivement en avant et en arrière de l'orifice d'alimentation (20) en fluide sous pression de manière à isoler la chambre hydraulique de pression avant (16) de l'orifice d'alimentation (20) lorsque le piston (14) est en position avant de repos.

3. Dispositif de frein de stationnement selon l'une des revendications 1 ou 2, **caractérisé en ce qu**'il comporte des moyens de commande (58) en translation du piston (14) selon la course de commande préalable qui correspond à un déplacement axial du piston (14) dans le cylindre (12, 22) entre :
- une position avant de repos, vers laquelle le piston (14) est rappelé élastiquement et dans laquelle les moyens de clapet (18) isolent de manière étanche la chambre hydraulique de pression avant (16) de l'orifice d'alimentation (20), et
- une position intermédiaire dans laquelle la chambre de pression avant (16) est alimentée en fluide hydraulique sous pression.

4. Dispositif de frein de stationnement selon la revendication 3, **caractérisé en ce que** les moyens de commande (58) en déplacement axial du piston (14) comportent des moyens d'entraînement (64), tel qu'un moteur électrique (68), qui sont susceptibles d'actionner des moyens (66) de transmission de mouvement permettant de transformer un mouvement de rotation du moteur (68) en un mouvement de translation du piston (14).

5. Dispositif de frein de stationnement selon la revendication 4, **caractérisé en ce que** les moyens de transmission de mouvement (66) comporte un mécanisme de type « vis-écrou » comportant un écrou taraudé (72) qui est immobilisé axialement et qui est entraîné en rotation par le moteur (68) de manière à provoquer un déplacement axial en translation d'une vis filetée (74) reçue dans l'écrou (72), ladite vis (74) étant susceptible d'entraîner le piston (14) en déplacement.

6. Dispositif de frein de stationnement selon l'une des revendications 3 à 5, **caractérisé en ce que** le piston (14) est susceptible d'être déplacé selon une course d'actionnement axiale vers l'arrière de sa position intermédiaire à une position arrière de freinage, dans laquelle le piston (14) sollicite des moyens d'actionnement (90) exerçant l'effort mécanique déterminé sur l'organe de manoeuvre du frein.

7. Dispositif de frein de stationnement selon la revendication 6, **caractérisé en ce qu**'il comporte des moyens de verrouillage mécanique (102) destinés à immobiliser axialement le piston (14) en position arrière de freinage.

8. Dispositif de frein de stationnement selon l'une des revendications 6 ou 7, **caractérisé en ce que** les moyens d'actionnement (90) de l'organe de manoeuvre du frein sont liés en déplacement au piston (14) avec un jeu axial déterminé qui est sensiblement égal à la course de commande du piston (14) de manière que les moyens d'actionnement (90) ne soient pas sollicités lors du déplacement du piston (14) de sa position avant de repos à sa position intermédiaire.

9. Dispositif de frein de stationnement selon l'une des revendications 6 à 8, **caractérisé en ce que** les moyens d'actionnement (90) dont une tige (92) comportant une tête cylindrique (96) est montée mobile axialement dans un tronçon cylindrique interne (32) complémentaire du piston (14) entre:
- une position avant de repos, dans laquelle là tête (96) de la tige (92) est en appui contre une butée arrière (38) du tronçon cylindrique interne (32) du piston (14) en position avant de repos, et
- une position, arrière de fonctionnement dans laquelle la tête (96) de la tige (92), qui est en appui contre une butée avant (36) du tronçon cylindrique interne (32) du piston (14), est sollicitée au cours de la course d'actionnement de manière à exercer un effort mécanique déterminé sur l'organe de manoeuvre.

10. Procédé de commande d'un dispositif de frein de stationnement ou de secours du type comportant un dispositif d'actionnement (90) selon les revendications précédentes, **caractérisé en ce qu'**il comporte pour la mise en oeuvre du frein de stationnement :
- une première étape consistant à actionner les moyens de commande (58) du piston pour déplacer le piston (14) de sa position avant de repos vers sa position intermédiaire de manière à permettre l'alimentation en fluide hydraulique sous pression de la chambre de pression avant (16) ;
- une deuxième étape consistant à alimenter la chambre de pression avant (16) en fluide hydraulique à une première pression P1 de manière à provoquer le déplacement du piston (14) à l'encontre de moyen de rappel (60) jusqu'à sa position arrière de freinage dans laquelle il exerce sur les moyens d'actionnement (90) de l'organe de manoeuvre un effort mécanique déterminé maximal correspondant à l'application par les moyens de blocage du frein d'un effort de freinage suffisant pour immobiliser le véhicule en stationnement ; et
- une troisième étape consistant à actionner les moyens de verrouillage (102) pour verrouiller mécaniquement le piston (14) dans sa position arrière de freinage.

11. Procédé de commande selon la revendication 10, **caractérisé en ce qu**'il comporte pour libérer le frein de stationnement une étape consistant à alimenter la chambre de pression avant (16) en fluide hydraulique à une seconde pression P2 supérieure à la première pression P1 de manière à permettre le déverrouillage du piston (14) qui est rappelé élastiquement vers sa position avant de repos.

## Claims

1. Parking or emergency brake device, particularly for a motor vehicle, of the type comprising a controlled actuating device (10) which exerts a determined mechanical force on a brake operating member in order to apply the said brake blocking means so as to immobilize the vehicle, of the type in which the actuating device (10), of hydraulic type, supplied with pressurized fluid, comprises:
- a cylinder (12, 22) in which there slides a piston (14) which axially delimits a front hydraulic pressure chamber (16) and which is able to exert the determined mechanical force on the operating member over an actuating travel, and
- valve means (18) which selectively cause the front pressure chamber (16) to be placed in communication with a pressurized hydraulic fluid supply port (20) so as to establish a hydraulic actuating pressure in the front pressure chamber (16),
**characterized in that** the valve means (18), interposed between the piston (14) and the cylinder (12), are controlled by an axial movement of the piston (14) over a control travel prior to its actuating travel.

2. Parking brake device according to claim 1, **characterized in that** the valve means (18) comprise primary (50) and secondary (52) sealing means which are able to be arranged axially respectively in front of and behind the pressurized fluid supply port (20) so as to isolate the front hydraulic pressure chamber (16) from the supply port (20) when the piston (14) is in the forward position of rest.

3. Parking brake device according to either of claims 1 and 2, **characterized in that** it comprises control means (58) for the translational control of the piston (14) over the prior control travel which corresponds to an axial movement of the piston (14) in the cylinder (12, 22) between:
- a forward position of rest, towards which the piston (14) is elastically returned and in which the valve means (18) isolate the front hydraulic pressure chamber (16) in a sealed manner from the supply port (20), and
- an intermediate position in which the front pressure chamber (16) is supplied with pressurized hydraulic fluid.

4. Parking brake device according to claim 3, **characterized in that** the control means (58) controlling the axial movement of the piston (14) comprise drive means (64), such as an electric motor (68), which are able to actuate movement-transmission means (66) allowing a rotational movement of the motor (68) to be converted into a translational movement of the piston (14).

5. Parking brake device according to claim 4, **characterized in that** the movement-transmission means (66) comprise a mechanism of the "screw-nut" type comprising a tapped nut (72) which is axially immobilized and which is driven in rotation by the motor (68) in such a way as to cause a translational axial movement of a threaded screw (74) received in the nut (72), the said screw (74) being able to drive the movement of the piston (14).

6. Parking brake device according to one of claims 3 to 5, **characterized in that** the piston (14) can be moved backwards over an axial actuating travel from its intermediate position to a rear braking position, in which the piston (14) acts on actuating means (90) exerting the determined mechanical force on the brake operating member.

7. Parking brake device according to claim 6, **characterized in that** it comprises mechanical-locking means (102) intended to axially immobilize the piston (14) in the rear braking position.

8. Parking brake device according to either of claims 6 and 7, **characterized in that** the actuating means (90) for actuating the brake operating member are linked in terms of movement to the piston (14) with a determined axial clearance which is roughly equal to the control travel of the piston (14) so that the actuating means (90) are not influenced when the piston (14) moves from its forward position of rest to its intermediate position.

9. Parking brake device according to one of claims 6 to 8, **characterized in that** the actuating means (90) are a rod (92) comprising a cylindrical head (96) which is mounted to move axially in a complementary internal cylindrical section (32) of the piston (14) between:
- a forward position of rest, in which the head (96) of the rod (92) bears against a rear stop (38) of the internal cylindrical section (32) of the piston (14) in the forward position of rest, and
- a rear operating position in which the head (96) of the rod (92), which bears against a front stop (36) of the internal cylindrical section (32) of the piston (14) is acted upon during the actuating travel so as to exert a determined mechanical force on the operating member.

10. Operating method for controlling a parking or emergency brake device of the type comprising an actuating device (90) according to the preceding claims, **characterized in that** it comprises, for operating the parking brake:
- a first step which consists in actuating the control means (58) that control the piston so as to move the piston (14) from its forward position of rest towards its intermediate position in such a way as to allow pressurized hydraulic fluid to be supplied to the front pressure chamber (16);
- a second step which consists in supplying the front pressure chamber (16) with hydraulic fluid at a first pressure P1 so as to cause the piston (14) to move against the action of the return means (60) as far as its rear braking position in which it exerts on the actuating means (90) that actuate the operating member, a maximum determined mechanical force corresponding to the applying, by the brake blocking means, of a sufficient braking force to immobilize the vehicle when it is parked; and
- a third step which consists in actuating the locking means (102) to mechanically lock the piston (14) in its rear braking position.

11. Operating method according to claim 10, **characterized in that** it comprises, in order to release the parking brake, a step that consists in supplying the front pressure chamber (16) with hydraulic fluid at a second pressure P2 higher than the first pressure P1 so as to allow the unlocking of the piston (14) which is returned elastically towards its forward position of rest.

## Patentansprüche

1. Feststellbrems- oder Notbremsvorrichtung, insbesondere für ein Kraftfahrzeug, vom Typ mit einer Vorrichtung (10) zur gesteuerten Betätigung, die eine vorbestimmte mechanische Kraft auf ein Organ zur Bedienung der Bremse ausübt, um das Andrücken der Blockierungsmittel der Bremse hervorzurufen, so dass das Fahrzeug angehalten wird, vom Typ, bei dem die hydraulische Betätigungsvorrichtung (10), die mit unter Druck stehendem Fluid versorgt wird, folgendes aufweist:
- einen Zylinder (12, 22), in dem ein Kolben (14) gleitet, der axial eine vordere hydraulische Druckkammer (16) begrenzt und der die vorbestimmte mechanische Kraft gemäß einem Betätigungsweg auf das Bedienorgan ausüben kann, und
- Ventilelementmittel (18), die selektiv die Verbindung der vorderen Druckkammer (16) mit einer Öffnung (20) zur Versorgung mit unter Druck stehendem Hydraulikfluid steuern, um einen hydraulischen Betätigungsdruck in der vorderen Druckkammer (16) aufzubauen,
**dadurch gekennzeichnet, dass** die zwischen dem Kolben (14) und dem Zylinder (12) angeordneten Ventilelementmittel (18) durch eine axiale Verlagerung des Kolbens (14) gemäß einem Steuerungsweg vor dessen Betätigungsweg gesteuert werden.

2. Feststellbremsvorrichtung nach Anspruch 1, **dadurch gekennzeichnet, dass** die Ventilelementmittel (18) primäre Dichtmittel (50) und sekundäre Dichtmittel (52) aufweisen, die axial vor bzw. hinter der Öffnung (20) zur Versorgung mit unter Druck stehendem Fluid angeordnet sein können, so dass die vordere hydraulische Druckkammer (16) von der Versorgungsöffnung (20) getrennt ist, wenn sich der Kolben (14) in der vorderen Ruhestellung befindet.

3. Feststellbremsvorrichtung nach Anspruch 1 oder 2, **dadurch gekennzeichnet, dass** sie Mittel (58) zur Steuerung einer Translationsbewegung des Kolbens (14) gemäß dem vorhergehenden Steuerungsweg aufweist, welcher einer axialen Verlagerung des Kolbens (14) im Hauptzylinder (12, 22) entspricht zwischen:
- einer vorderen Ruhestellung, in die der Kolben (14) elastisch zurückgestellt ist und in der die Ventilelementmittel (18) die vordere hydraulische Druckkammer (16) in dichter Weise von der Versorgungsöffnung (20) trennen, und
- einer Zwischenstellung, in der die vordere Druckkammer (16) mit unter Druck stehendem Hydraulikfluid versorgt wird.

4. Feststellbremsvorrichtung nach Anspruch 3, **dadurch gekennzeichnet, dass** die Mittel (58) zur Steuerung der axialen Verlagerung des Kolbens (14) Antriebsmittel (64), wie etwa einen Elektromotor (68), aufweisen, die Bewegungsübertragungsmittel (66) betätigen können, welche die Umwandlung einer Drehbewegung des Motors (68) in eine Translationsbewegung des Kolbens (14) ermöglichen.

5. Feststellbremsvorrichtung nach Anspruch 4, **dadurch gekennzeichnet, dass** die Bewegungsübertragungsmittel (66) einen Mechanismus vom Typ "Schraube-Mutter"-Mechanismus mit einer Gewindemutter (72) aufweisen, welche axial blockiert ist und vom Motor (68) so in Drehung versetzt wird, dass sie eine axiale Translationsbewegung einer in der Mutter (72) aufgenommenen Gewindeschraube (74) hervorruft, wobei die Schraube (74) den Kolben (14) in Bewegung mitnehmen kann.

6. Feststellbremsvorrichtung nach einem der Ansprüche 3 bis 5, **dadurch gekennzeichnet, dass** der Kolben (14) gemäß einem axialen Betätigungsweg aus seiner Zwischenstellung nach hinten in eine hintere Bremsstellung verlagert werden kann, in welcher der Kolben (14) Betätigungsmittel (90) beaufschlagt, die die vorbestimmte mechanische Kraft auf das Organ zur Bedienung der Bremse ausüben.

7. Feststellbremsvorrichtung nach Anspruch 6, **dadurch gekennzeichnet, dass** sie Mittel (102) zur mechanischen Verriegelung aufweist, die dazu vorgesehen sind, den Kolben (14) axial in der hinteren Bremsstellung zu blockieren.

8. Feststellbremsvorrichtung nach Anspruch 6 oder 7, **dadurch gekennzeichnet, dass** die Mittel (90) zur Betätigung des Organs zur Bedienung der Bremse mit vorbestimmtem axialem Spiel an die Verlagerung des Kolbens (14) gekoppelt sind, wobei das Spiel im Wesentlichen dem Steuerungsweg des Kolbens (14) entspricht, so dass die Betätigungsmittel (90) bei der Verlagerung des Kolbens (14) aus seiner vorderen Ruhestellung in seine Zwischenstellung nicht beaufschlagt werden.

9. Feststellbremsvorrichtung nach einem der Ansprüche 6 bis 8, **dadurch gekennzeichnet, dass** die Betätigungsmittel (90) eine Stange (92) mit einem zylindrischen Kopf (92) aufweisen, der in einem komplementären zylindrischen Innenabschnitt (32) des Kolbens (14) so angebracht ist, dass er axial beweglich ist zwischen:
- einer vorderen Ruhestellung, in welcher der Kopf (96) der Stange (92) an einem hinteren Anschlag (38) des zylindrischen Innenabschnitts (32) des Kolbens (14) anliegt, welcher sich in der vorderen Ruhestellung befindet, und
- einer hinteren Betriebstellung, in welcher der Kopf (96) der Stange (92), der an einem vorderen Anschlag (36) des zylindrischen Innenabschnitts (32) des Kolbens (14) anliegt, während des Betätigungswegs so beaufschlagt wird, dass eine vorbestimmte mechanische Kraft auf das Bedienorgan ausgeübt wird.

10. Verfahren zur Steuerung einer Feststellbrems- oder Notbremsvorrichtung, vom Typ mit einer Betätigungsvorrichtung (90) nach den vorhergehenden Ansprüchen, **dadurch gekennzeichnet, dass** es zur Anwendung der Feststellbremse folgende Schritte umfasst:
- einen ersten Schritt, der darin besteht, die Mittel (58) zur Steuerung des Kolbens zu betätigen, um den Kolben (14) aus seiner vorderen Ruhestellung in seine Zwischenstellung zu verlagern, so dass die Versorgung der vorderen Druckkammer (16) mit unter Druck stehendem Hydraulikfluid möglich ist;
- einen zweiten Schritt, der darin besteht, die vordere Druckkammer (16) mit Hydraulikfluid mit einem ersten Druck P1 zu versorgen, so dass die Verlagerung des Kolbens (14) entgegen dem Rückstellmittel (60) bis in seine hintere Bremsstellung bewirkt wird, in der er auf die Mittel (90) zur Betätigung des Bedienorgans eine maximale vorbestimmte mechanische Kraft ausübt, die dem Aufbringen durch die Blockierungsmittel der Bremse einer zum Anhalten des Fahrzeugs in der Parkstellung ausreichenden Bremskraft entspricht; und
- einen dritten Schritt, der darin besteht, die Verriegelungsmittel (102) zu betätigen, um den Kolben (14) mechanisch in seiner hinteren Bremsstellung zu verriegeln.

11. Steuerungsverfahren nach Anspruch 10, **dadurch gekennzeichnet, dass** es zum Lösen der Feststellbremse einen Schritt umfasst, der darin besteht, die vordere Druckkammer (16) mit Hydraulikfluid mit einem zweiten Druck P2 zu versorgen, welcher höher ist als der erste Druck P1, so dass die Entriegelung des Kolbens (14) gestattet ist, der elastisch in seine vordere Ruhestellung zurückgestellt wird.
